**Europäisches Patentamt**

**European Patent Office**

**Office européen des brevets**

(11) Veröffentlichungsnummer: **0 110 343**
**B1**

(12) **EUROPÄISCHE PATENTSCHRIFT**

(45) Veröffentlichungstag der Patentschrift:
19.04.89

(51) Int. Cl.⁴: **A 22 C 11/02**

(21) Anmeldenummer: **83111806.2**

(22) Anmeldetag: **25.11.83**

(54) **Verfahren und Vorrichtung zum taktweisen Beschicken des Füllrohrs einer Wurstfüll- und Verschliessmaschine mit füllfertigen Schlauchhüllenabschnitten.**

(30) Priorität: **27.11.82 DE 3244064**

(43) Veröffentlichungstag der Anmeldung:
**13.06.84 Patentblatt 84/24**

(45) Bekanntmachung des Hinweises auf die Patenterteilung:
**19.04.89 Patentblatt 89/16**

(84) Benannte Vertragsstaaten:
**AT BE CH DE FR GB IT LI NL SE**

(56) Entgegenhaltungen:
**EP-A-0 016 500**
**EP-A-0 050 161**
**DE-A-2 941 872**

(73) Patentinhaber: **Teepak Produktie N.V.,**
**Industriepark 17, B-3900 Lommel (BE)**

(72) Erfinder: **Kollross, Günter, Am Wallerstädter Weg**
**20, D-6080 Gross Gerau- Dornheim (DE)**

(74) Vertreter: **Weber, Dieter, Dr., Dr. Dieter Weber**
**und Dipl.- Phys. Klaus Seiffert Patentanwälte**
**Gustav- Freytag- Strasse 25 Postfach 6145, D-6200**
**Wiesbaden 1 (DE)**

## Beschreibung

Die Erfindung betrifft ein Verfahren zum taktweisen Beschicken des Füllrohrs einer Wurstfüll- und Verschließmaschine mit füllfertigen Schlauchhüllenabschnitten, wobei ein auf einer Vorratsrolle flach aufgewickeltes Schlauchhüllenmaterial zunächst abgezogen, geöffnet und in jeweils einer Abschnittslänge axial auf einen Träger aufgezogen wird und daraufhin der aufgezogene Hüllenabschnitt vom Materialstrang abgetrennt und mit dem Träger vor das Füllrohr zur Überführung auf dieses verbracht wird, während gleichzeitig auf einem weiteren Träger ein neuer Hüllenabschnitt zur Wiederholung der vorerwähnten Arbeitsschritte im ständigen Wechsel der beiden Träger aufgezogen wird.

Ein derartiges Verfahren wird mit der in Fig. 3 der DE-A-2 941 872 abgebildeten Vorrichtung verwirklicht, bei welcher eine mit zwei diametral versetzten parallelen Trägerrohren bestückte Revolvereinrichtung in jeder Schaltstellung jeweils mit einem Rohr der Öffnungs- und Aufzieheinrichtung und mit dem anderen Rohr dem Füllrohr der Wurstfüll- und -verschließmaschiene gegenübersteht. Bei dieser Vorrichtung werden verhältnismäßig lange Schlauchhüllenabschnitte wechselweise auf die Trägerrohre aufgezogen und dabei zu Schlauchraupen gerafft, während gleichzeitig die zum Raffen erforderliche Blähluft durch das Trägerrohr in das Schlauchinnere eingeleitet wird. Nach dem Abtrennen der Schlauchraupe vom Materialstrang schaltet die Revolvereinrichtung das damit bestückte Trägerrohr vor das Füllrohr und bringt es gegen dieses in Anlage, woraufhin die Schlauchraupe mit einem mechanischen Abstreifer auf das Trägerrohr aufgeschoben wird. Da dieses Aufschieben entgegengesetzt zum Aufziehen und Raffen mit dem vom Materialstrang abgetrennten Raupenende voran erfolgt, ist es nicht möglich, bereits in der Raffstellung das beim Füllen vorauseilende Ende des Hüllenmaterials zu verschließen. Es bedarf deshalb nach dem Aufschieben auf das Füllrohr besonderer Manipulationen, um das offene Schlauchhüllenende durch die Darmbremse der Füllmaschine hindurchzuführen und in den Arbeitsbereich der dortigen Verschließeinrichtung zu bringen, wo diese noch das Hüllenende verschließen muß, bevor der Füllvorgang beginnen kann. Da der Füllvorgang ohnehin wesentlich mehr Zeit als das Aufziehen und Raffen des Hüllenmaterials am anderen Trägerrohr benötigt, wird hierdurch offensichtlich die Leistungsfähigkeit der gesamten Vorrichtung erheblich beeinträchtigt. Da ferner die Schlauchraupen nach dem Raffen zum Wiederaufspringen längs der Trägerrohre neigen, besteht die Gefahr, daß sich ein Teil des Hüllenmaterials während der Umschaltung des Revolvers über das Trägerrohrende hinaus vorschiebt und zwischen Trägerrohr und Füllrohr eingeklemmt wird, wodurch ein ordnungsgemäßes Aufschieben der Raupe auf das Füllrohr verhindert wird.

Es ist auch bereits mehrfach vorgeschlagen worden, einen Füllrohrrevolver zu verwenden, bei welchem die Schlauchhüllenabschnitte unmittelbar auf eines von wenigstens zwei am Revolver angebrachten Füllrohren aufgezogen werden, während durch das andere Füllrohr hindurch Wurstmasse in das davon ablaufende Hüllenmaterial eingefüllt wird. Bei solchen Füllrohrrevolvern besteht das oben erwähnte Verklemmungsproblem naturgemäß nicht. Sie sind jedoch wegen der erforderlichen Mittel zur Steuerung des Brätflusses durch jeweils nur das in Arbeitsstellung befindliche Rohr aufwendig in der Herstellung und zeitraubend bei der täglichen Reinigung.

Ein besonderes Problem bildet außerdem bei solchen Füllrohrrevolvern die Zufuhr der Blähluft, für welche die mit Brät verschmutzten Füllrohre nicht benutzt werden können. Bei dem mit einem solchen Füllrohrrevolver arbeitenden Ausführungsbeispiel nach den Figuren 1 und 2 der DE-A-2 941 872 ist deshalb zur Zufuhr der Blähluft eine vom Füllrohrrevolver getrennte Kanüle vorgesehen, die nach dem Umschalten des Revolvers an der Außenseite des in Raffstellung angekommenen Füllrohrs axial in Stellung gebracht und nach dem Raffen aus der Schlauchraupe wieder herausgezogen wird.

Bei einer anderen bekannten Vorrichtung mit Füllrohrrevolver (DE-A-2 721 392) erfolgt das Öffnen und Aufziehen des Schlauchhüllenmaterials mit Unterdruck durch außenseitig an der Hülle angreifende, hin- und hergehende Saugwerkzeuge. Ein axiales Raffen des Schlauchmaterials ist hierbei nicht möglich, und die zur Verarbeitung gelangenden Einzelhüllen für jeweils nur eine Wurst erfordern dennoch große Füllrohrlängen mit der Folge einer unerwünscht großen Masse des Revolvers und dadurch entsprechend großen Totzeiten beim Umschalten.

Bei einer weiteren bekannten Vorrichtung mit Füllrohrrevolver (DE-A-3 108 074) wird das geöffnete Schlauchende zunächst auf eine Trägerhülse aufgezogen und diese mit dem aufgezogenen Schlauchhüllenabschnitt auf das Füllrohr geschoben, das Schlauchende dort festgehalten und dann die Trägerhülse zurückgezogen, um das Verschließen und Abtrennen des vor dem Füllrohr befindlichen Endes des aufgezogenen Schlauchhüllenabschnitts zu ermöglichen. Da die Trägerhülse demzufolge ständig innerhalb des Schlauchmaterialstrangs verbleibt, kann auf die Zufuhr von Blähluft beim Aufziehen verzichtet werden. Jedoch ist auch hier ein axiales Raffen des Schlauchmaterials nicht möglich, so daß sich die Vorrichtung nur zum Verarbeiten von Einzelhüllen eignet und dennoch lange Füllrohre sowie eine entsprechend lange und in ihrer vollen Länge verschiebliche Trägerhülse benötigt werden, was zu großen Abmessungen, Massenbewegungen und Totzeiten führt.

Der Erfindung liegt die Aufgabe zugrunde, ein Verfahren zum taktweisen Beschicken des Füllrohres einer Wurstfüll- und -verschließmaschine mit füllfertigen Schlauchhüllenabschnitten von einer Vorratsrolle zu schaffen, das bei geringstmöglichem Zeitbedarf für das Bereitstellen der neuen Schlauchhüllen auf dem Füllrohr ohne Füllrohrrevolver auskommt und eine sichere und störungsfreie Überführung der zuvor an anderer Stelle auf einen Träger aufgezogenen und vor dem Abteilen bereits an einem Ende verschlossenen Hüllenabschnitte auf das maschinenfeste Einzelfüllrohr gestattet.

Bei einem Verfahren mit den eingangs genannten Merkmalen wird diese Aufgabe erfindungsgemäß dadurch gelöst, daß jeweils in der gleichen axialen Richtung der Schlauchhüllenabschnitt auf den Träger aufgezogen, der Träger auf das Füllrohr aufgeschoben und der Träger aus dem festgehaltenen Schlauchhüllenabschnitt herausgezogen wird und daß schließlich der Träger zur Seite weggebracht wird.

Da bei dem erfindungsgemäßen Verfahren das Aufziehen des Hüllenmaterials auf den Träger, das Aufschieben des Trägers auf das Füllrohr und schließlich das Herausziehen des Trägers aus der auf dem Füllrohr mit Hilfe des Anschlags festgehaltenen Schlauchhülle in ein und derselben Richtung erfolgen, ist es auch ohne Benutzung eines Füllrohrrevolvers möglich, die Schlauchhüllenabschnitte schon beim Abtrennen zu verschließen. Außerdem kann sofort nach dem Aufschieben des Trägers mit dem Schlauchhüllenabschnitt die Verschließeinrichtung der Füllmaschine mit der daran angebrachten Darmbremse in Stellung am überstehenden Füllrohrende gebracht werden, ohne erst abwarten zu müssen, bis der Träger vom Füllrohr wieder entfernt worden ist. Dadurch wird wertvolle Zeit bis zum Beginn eines neuen Füllvorgangs eingespart und die Leistungsfähigkeit der Vorrichtung erhöht.

Da, wie bereits erwähnt, das Aufziehen und Abtrennen der Schlauchhüllenabschnitte vom Materialstrang viel schneller vonstatten geht als das Füllen der auf das Füllrohr gebrachten Schlauchhüllenabschnitte mit Wurstbrät, kann sofort mit jedem Aufschieben eines jeden Hüllenabschnitts auf das Füllrohr der nächste Abschnitt auf den anderen Träger aufgezogen, verschlossen und abgetrennt werden, während der Füllvorgang noch läuft. Dies eröffnet in vorteilhafter Ausgestaltung der Erfindung die Möglichkeit, daß noch während des Füllens der andere Träger mit dem darauf aufgezogenen Hüllenabschnitt in der Nähe des Füllrohrs zum endgültigen Verbringen vor das Füllrohr bereitgestellt wird, während der erste Träger zunächst auf dem Füllrohr in der aus dem Schlauchhüllenabschnitt herausgezogenen Stellung verbleibt und erst mit der Bereitstellung des zweiten Trägers in der Nähe des Füllrohrs seinerseits von diesem seitlich entfernt wird. Dadurch wird der Weg, den der mit der neuen Schlauchhülle bestückte Träger nach Beendigung des Füllvorgangs und der Entfernung der Verschließeinrichtung und der Darmbremse vom Füllrohr noch benötigt, um vor das Füllrohr gebracht zu werden, erheblich verkürzt, was zu einer weiteren Verminderung der Totzeiten zwischen den Füllvorgängen führt.

Die Übereinstimmung von Aufziehrichtung auf den Träger und Aufschieberichtung des Trägers und des Hüllenabschnitts auf das Füllrohr gestattet darüber hinaus in weiterer vorteilhafter Ausgestaltung des erfindungsgemäßen Verfahrens, daß dem Schlauchmaterial während des Aufziehens durch den Träger in an sich bekannter Weise Luft zum Aufblähen und/oder Flüssigkeit zum innenseitigen Benetzen zugeführt wird.

Das erfindungsgemäße Verfahren erlaubt sowohl eine Beschickung des Füllrohrs mit zu Raupen gerafften längeren Schlauchabschnitten als auch mit Einzelhüllen, wobei letztere zweckmäßig ebenfalls unter Bildung von Querfalten axial auf den Träger gerafft werden. Dadurch können die Träger extrem kurz und ihre Trägermasse mit Rücksicht auf ein schnelles Verbringen vor das Füllrohr klein gehalten werden.

In beiden Fällen ist es jedoch zweckmäßig, die gerafften Hüllenabschnitte gegen ein axiales Aufspringen nach dem Raffen zu sichern, was vorteilhaft dadurch zustandegebracht wird, daß die Hüllenabschnitte nach dem Aufziehen von innen her auf dem Träger verspannt werden und diese Verspannung erst beim Aufschieben auf das Füllrohr wieder gelöst wird.

Eine erfindungsgemäße Vorrichtung zur Durchführung des Verfahrens mit zwei Trägerrohren, welche mittels einer schaltbaren Revolvereinrichtung wechselweise zwischen einer ersten Position vor einer Hüllenöffnungs- und -aufzieheinrichtung und einer zweiten Position vor einem Füllrohr einer Wurstfüll und -verschließmaschine bewegbar sind, wobei an der Hüllenöffnungs- und -aufzieheinrichtung ein Schneidwerkzeug zum Abtrennen der aufgezogenen Hüllenabschnitte vom Materialstrang und vor dem Füllrohr eine Verschließeinrichtung mit einer das Füllrohr beim Füllen übergreifenden Darmbremse vorgesehen sind, welche bei der Umschaltung der Revolvereinrichtung aus dem Schwenkbereich der Trägerrohre wegbewegbar sind, ist dadurch gekennzeichnet, daß jedes Trägerrohr mit seinem einen Ende an der Revolvereinrichtung axial von dieser wegragend angebracht ist, daß das in der ersten Position befindliche Trägerrohr mit dem nicht befestigten Ende der Hüllenöffnungs- und -aufzieheinrichtung und das in der zweiten Position befindliche Trägerrohr mit dem befestigten Ende dem Füllrohr zugekehrt ist, daß die Trägerrohre bezüglich der Revolvereinrichtung durch getrennte Antriebe axial verschieblich sind und daß die Trägerrohre axial durchgehend geschlitzt und seitlich von dem Füllrohr wegbringbar sind.

Vorteilhafte Ausgestaltungen der erfindungsgemäßen Vorrichtung ergeben sich aus den weiteren Unteransprüchen.

Ein bevorzugtes Ausführungsbeispiel einer Vorrichtung zur Durchführung des erfindungsgemäßen Verfahrens wird nachstehend anhand der Zeichnung näher beschrieben, wobei auch das Verfahren selbst in seinen Einzelheiten genauer erläutert wird. In der Zeichnung zeigen:

Fig. 1:     in schematischer Darstellung eine Draufsicht auf die Vorrichtung in der Stellung unmittelbar nach der vollendeten Umschaltung der Revolvereinrichtung in eine neue Arbeitsstellung,

Fig. 2:     eine Stirnansicht auf die Revolvereinrichtung nach Fig. 1,

Fig. 3 - 5:  Ausschnitte der Draufsicht nach Fig. 1 in anderen Stellungen während eines Arbeitszyklus und

Fig. 6:     eine Stirnansicht der Revolvereinrichtung ähnlich Fig. 2 in der Stellung nach Fig. 5.

In der Zeichnung ist mit 10 eine Wurstfüllmaschine dargestellt, deren Füllrohr 12 taktweise mit Schlauchhüllenabschnitten zum Einfüllen von Wurstbrät und anschließenden Verschließen zu Einzelwürsten beschickt werden soll.

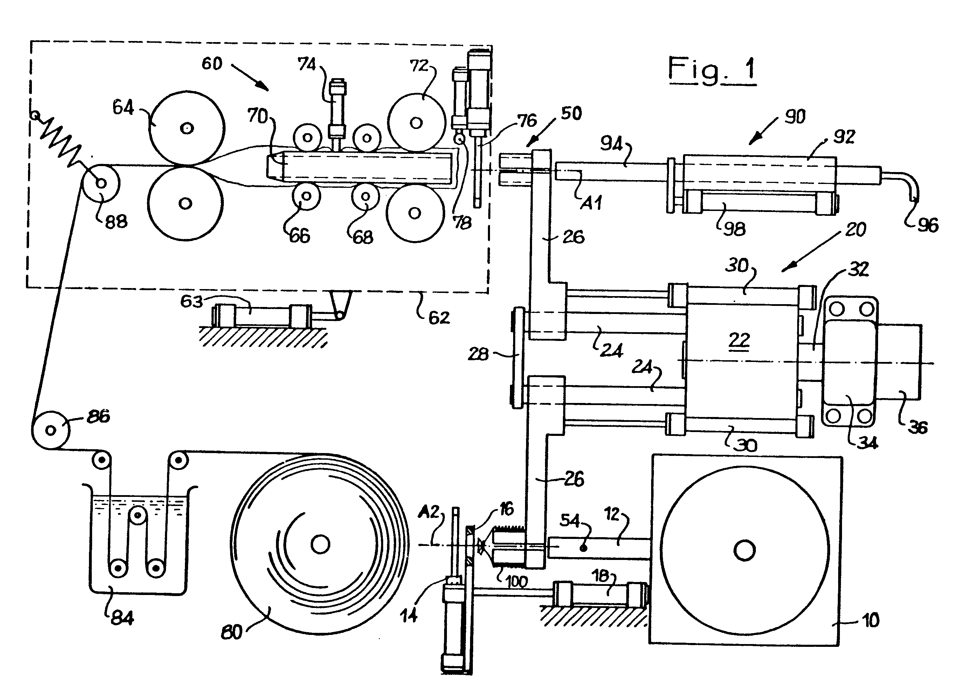

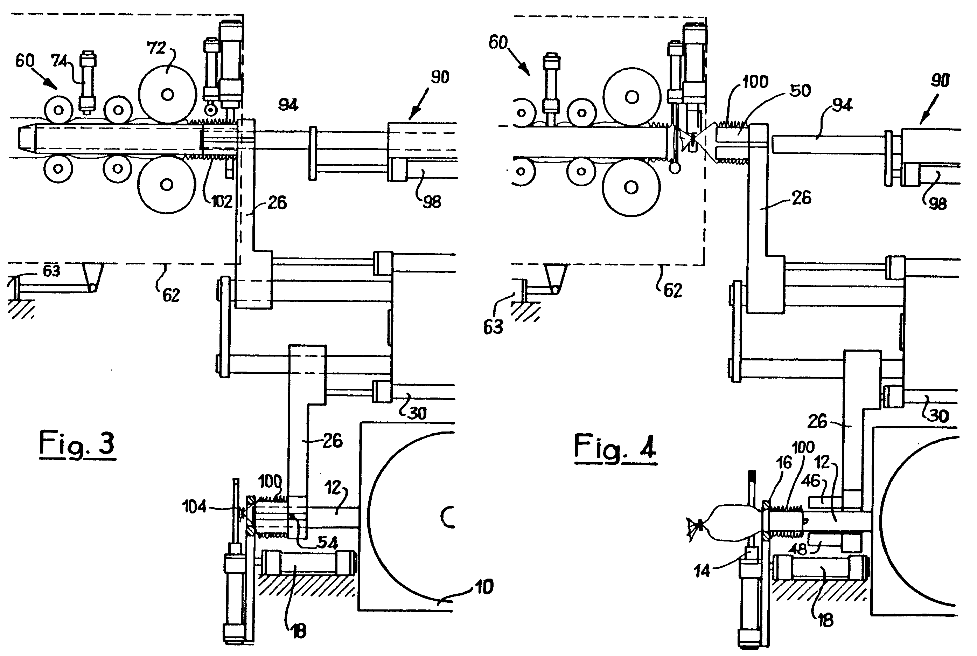

Vor dem Füllrohr 12 sind in bekannter Weise eine Verschließeinrichtung 14 zum Setzen von Verschlußklammern sowie eine Darmbremse 16 angeordnet. Die Darmbremse 16 bildet zusammen mit der Verschließeinrichtung 14 eine Einheit und kann von einem Kraftzylinder 18 zwischen der in Fig. 1 dargestellten Freigabestellung zur Beschickung des Füllrohrs mit einem neuen Hüllenabschnitt und der in Fig. 3 gezeigten Arbeitsstellung verschoben werden, in welcher die Darmbremse 16 das Füllrohrende in bekannter Weise zum Abbremsen des Hüllenmaterials beim Füllvorgang übergreift.

Neben der Füllmaschine 10 ist eine in ihrer Gesamtheit mit 20 bezeichnete Revolvereinrichtung angeordnet. Die Revolvereinrichtung 20 hat einen Revolverkopf 22 mit zwei Paaren einander gegenüberliegender achsparalleler Führungsstangen 24, auf denen je ein Tragarm 26 verschieblich geführt ist. Die freien Enden der Führungsstangen 24 sind durch ein Plattenteil 28 miteinander verbunden. Mit Hilfe je eines Kraftzylinders 30 können die Tragarme 26 getrennt voneinander zwischen der in Fig. 1 gezeigten vorgeschobenen Stellung und einer zurückgezogenen Stellung verschoben werden, wie sie der vor der Füllmaschine 10 stehende Tragarm in Fig. 4 einnimmt.

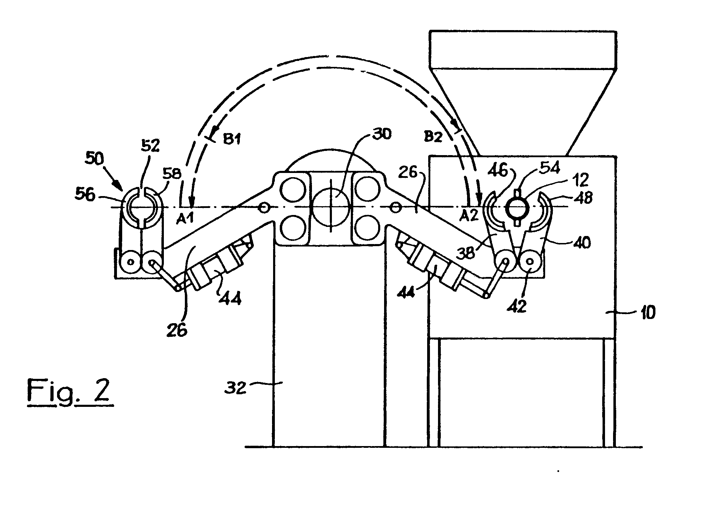

Der Revolverkopf 22 ist von einer Welle 32 getragen, die in einem am Boden neben der Füllmaschine 10 aufgestellten Lagerbock 34 drehbar gelagert ist und mittels eines schematisch bei 36 angedeuteten Schwenkantriebs zwischen zwei um 180° zueinander versetzten Arbeitsstellungen A1 und A2 über jeweils eine Zwischen- oder Bereitschaftsstellung B2 bzw. B1 hin- und hergeschaltet werden, wie in Fig. 2 durch Drehungspfeile angedeutet ist.

Wie weiterhin aus Fig. 2 ersichtlich ist, sind an den Enden der Tragarme 26 je zwei Hebel 38, 40 um parallele Achsen schwenkbar gelagert und durch ein Zahnradpaar 42 zur gegensinnigen Verschwenkung mittels eines Kraftzylinders 44 miteinander gekoppelt. Die Hebel 38, 40 tragen Rohrsegmente 46, 48, die sich bei in Anlage gegeneinander verschwenkten Hebeln 38, 40 paarweise zu Tragrohren 50 ergänzen. Die Hebelpaare 38, 40 der beiden Tragarme 26 weisen in entgegengesetzte Umfangsrichtungen, und die Tragarme 26 selbst sind gegenüber dem Revolverkopf 22 derart entgegengesetzt in Umfangsrichtung abgeknickt, daß die Tragrohre 50 mit Bezug auf die Achse der Revolvereinrichtung 20 diametral einander gegenüberliegen und dadurch mit jeder Umschaltung von einer Arbeitsstellung in die andere ihre Stellungen vertauschen, wobei die Tragrohre 50 in der einen Arbeitsstellung, die in Fig. 2 mit A2 bezeichnet ist, koaxial zum Füllrohr 12 ausgerichtet sind.

Die Rohrsegmente 46, 48 haben eine Umfangserstreckung von jeweils weniger als 180°. Dadurch verbleiben in der erwähnten Anlagestellung der Hebel 38, 40 zwischen den Längskanten der Rohrsegmente axial durchgehende Spalte 52, durch welche zwei diametral am Füllrohr 10 im Abstand zur Rohrmündung angebrachte Rückhaltestifte 54 hindurchzutreten vermögen, wenn das in der Arbeitsstellung A2 angelangte Tragrohr 50 durch Einfahren des Kraftzylinders 28 über das Füllrohr 12 geschoben wird.

Durch Betätigen der Kraftzylinder 44 können die Hebel 38, 40 und die von ihnen getragenen Rohrsegmente 46, 48 aus der in Fig. 2 links eingezeichneten Schließstellung in eine dort eingezeichnete Öffnungsstellung auseinandergespreizt werden, in welcher sich das geöffnete Tragrohr 50 bei Betätigung der Revolvereinrichtung 20 nach dem Aufschieben des Tragrohrs auf das Füllrohr ohne Behinderung zur Seite, d.h. nach oben bzw. unten wegschwenken läßt.

Die Rohrsegmente 46, 48 sind an ihren Befestigungsenden mit ringförmigen Flanschen 56, 58 versehen, die bei geschlossenem Tragrohr 50 ein Widerlager für die aufzuziehenden Schlauchhüllen bilden.

Das Aufziehen der Schlauchhüllen auf die Tragrohre 50 erfolgt mit einer Hüllenöffnungs- und -aufzieheinrichtung, die in ihrer Gesamtheit mit 60 bezeichnet ist. Die Hüllenöffnungs- und -aufzieheinrichtung ist auf einem nur schematisch durch eine gestrichelte Umrahmung angedeuteten Schlitten 62 angeordnet, der mitteis eines Kraftzylinders 63 zwischen einer in den Figuren 1, 4 und 5 gezeigten zurückgeschobenen Stellung und einer in Fig. 3 wiedergegebenen Arbeitsstellung verschiebbar ist.

Auf dem Schlitten 62 sind ein Quetschwalzenpaar 64, zwei Führungsrollenpaare 66, 68 mit einem dazwischen schwimmend gehaltenen Raffrohr 70 sowie ein durch zwei Raffräder 72 angedeutetes Raffwerkzeug gelagert. Weiterhin trägt der Schlitten 62 eine pneumatisch oder elektromagnetisch betätigbare Klemmeinrichtung 74 zum Festklemmen des Raffrohrs 70 mit dem darüber verlaufenden Schlauchhüllenmaterial sowie am vorderen, der Revolvereinrichtung 20 zugekehrten Ende ein Verschließwerkzeug 76 zum Setzen einzelner Verschlußklammern und unmittelbar dahinter eine Abtrenneinrichtung 78, die im Beispielsfall von einem quer durch das Hüllenmaterial bewegbaren Glühdraht gebildet ist.

Der Öffnungs- und -aufzieheinrichtung 60 wird von einer Vorratsrolle 80 ein dort flach im Strang aufgewickeltes Schlauchhüllenmaterial 82 zugeführt. Das Schlauchhüllenmaterial 82 durchläuft zunächst eine Wässerungseinrichtung 84, in der es auf seinen füllfertigen Feuchtigkeitsgehalt gebracht wird, und gelangt über eine ortsfeste Umlenkrolle 86 und eine am Schlitten 62 federnd angeordnete Spannrolle 88 zwischen den Quetschwalzen 64 hindurch zu dem Raffrohr 70, wo es geöffnet und zwischen den Führungsrollen 66, 68 hindurch schließlich dem Raffwerkzeug 72 dargeboten wird.

Der Öffnungs- und -aufzieheinrichtung 60 gegenüber befindet sich eine ortsfeste Luftzuführeinrichtung 90 mit einem in einer Halterung 92 verschieblichen Zuführrohr 94, in welches über einen flexiblen Schlauch 96 unter geringem Überdruck stehende Luft aus einer (nicht gezeigten) Druckluftquelle zugeleitet werden kann. Das Zuführrohr 94 ist koaxial zum Raffrohr 70 und dem in der Stellung A1 befindlichen Tragrohr 50 ausgerichtet und kann mittels eines Kraftzylinders 98 von einer in den Figuren 1, 4 und 5 gezeigten zurückgezogenen Stellung, in welcher die Luftzufuhr zweckmäßig unterbrochen ist, in eine in Fig. 3 dargestellte Arbeitsstellung vorgeschoben werden, in welcher es in das Trägerrohr 50 ragt und Luft durch das Raffrohr 70 hindurch in das geöffnete Schlauchhüllenmaterial bläst, welches dadurch im gesamten Öffnungsbereich aufgebläht wird.

Anstelle oder gleichzeitig mit der Blähluft kann auch Flüssigkeit wie insbesondere Öl durch das Zuführrohr 94 geleitet werden, um das Schlauchmaterial innenseitig damit zu benetzen.

Die beschriebene Vorrichtung dient zum Bereitstellen von gerafften Schlauchhüllenabschnitten 100 auf jeweils einem Tragrohr 50 mit Hilfe der Hüllenöffnungs- und -aufzieheinrichtung 60 und zum Überführen je eines solchen Schlauchhüllenabschnitts 102 auf das Füllrohr 12 nach jeder vollständigen Umschaltung der Revolvereinrichtung 20.

Zur folgenden Erläuterung der Wirkungsweise eines solchen Arbeitszyklus sei von der Stellung der einzelnen Komponenten der Vorrichtung nach Fig. 1 ausgegangen, die diese unmittelbar nach einer Umschaltung der Revolvereinrichtung 20 in eine neue Arbeitsstellung einnehmen.

In dieser Stellung sind

- die in Schaltstellung A1 stehenden Rohrsegmente 46, 48 zu einem leeren Tragrohr gegeneinander geschwenkt,
- die in Schaltstellung A2 stehenden Rohrsegmente 46, 48 mit einem darauf befindlichen gerafften Schlauchhüllenabschnitt 100 durch Betätigung des dortigen Kraftzylinders 44 in Spreizrichtung derart auseinandergespreizt, daß der Schlauchhüllenabschnitt durch Verspannung von innen festgehalten und dadurch an einem axialen Aufspringen gehindert ist,
- der Schlitten 62 bei stillstehender Hüllenöffnungs- und -aufzieheinrichtung 60 und betätigter Klemmeinrichtung 74 zurückgezogen,
- die Luftzuführeinrichtung 90 bei gesperrter Luftzufuhr zurückgezogen,
- die Verschließeinrichtung 14 und die Darmbremse 16 vom Füllrohr 12 zurückgezogen und
- die Wurstfüllmaschine 10 ausgeschaltet.

Aus dieser Stellung heraus läuft nun der Arbeitszyklus wie folgt ab:

Der Schlitten 62 wird vom Kraftzylinder 63 vorgefahren, und die Klemmeinrichtung 74 wird gelöst. Gleichzeitig wird auch das Rohr 94 der Luftzuführeinrichtung 90 mit Hilfe des Kraftzylinders 98 in die Arbeitsstellung vorgeschoben und der Kraftzylinder eingeschaltet. Dann wird die Hüllenöffnungs- und -aufzieheinrichtung 60 eingeschaltet, wodurch fortlaufend Schlauchhüllenmaterial 82 von der Vorratsrolle 80 durch die Bewässerungseinrichtung 84 hindurch abgezogen, über dem schwimmenden Raffrohr 70, welches sich stirnseitig am Tragrohr 50 abstützt, geöffnet und unter Bildung von Querfalten auf das Tragrohr 50 in Gestalt einer Raupe 102 aufgezogen wird (Fig. 3 oben).

Am anderen Trägerarm 26 werden inzwischen die Rohrsegmente 46, 48 zur Aufhebung der Verspannung des dortigen Schlauchhüllenabschnitts 100 gegeneinander verschwenkt und der Kraftzylinder 30 in Einfahrrichtung betätigt mit der Folge, daß das dortige Tragrohr 50 mit dem an seinem Ende bei 104 verschlossenen Schlauchhüllenabschnitt 100 auf das Füllrohr 12 aufgeschoben wird, bis der Schlauchhüllenabschnitt 100 von den Rückhaltestiften 54 erfaßt und gegenüber der weiteren Bewegung des Tragrohrs 50 zurückgehalten wird (Fig. 3 unten). Mit dem Aufschieben des Tragrohrs 50 auf das Füllrohr fährt zugleich der Kraftzylinder 18 aus und bringt die Verschließeinrichtung 14 vor das Füllrohr 12, wo die Darmbremse 16 das Füllrohrende mit dem darauf aufgezogenen Schlauchhüllenmaterial übergreift. Daraufhin wird sofort die Füllmaschine 10 eingeschaltet und beginnt, den auf das Füllrohr aufgeschobenen Schlauchhüllenabschnitt 100 mit Wurstbrät zu füllen (Fig. 3 unten).

Wenn die Hüllenöffnungs- und -aufzieheinrichtung eine vorbestimmte Länge Schlauchhüllenmaterial auf das dortige Tragrohr 50 aufgeschoben hat, wird sie abgeschaltet, und die Rohrsegmente 46, 48 werden zur Verspannung des gerafften Schlauchhüllenmaterials gespreizt. Gleichzeitig werden die Luftversorgung zur Luftzuführeinrichtung 90 unterbrochen und das Luftzuführrohr 94 mit Hilfe des Kraftzylinders 98 zurückgezogen. Dann klemmt die Klemmeinrichtung 74 das Raffrohr 70 fest, und der Kraftzylinder 63 zieht den Schlitten 62 mit der Hüllenöffnungs- und -aufzieheinrichtung 70 zurück, wodurch zwischen dem festgeklemmten Raffrohr 70 und dem Tragrohr 50 ein größerer Abstand zum Setzen einer Verschlußklammer mit der Verschließeinrichtung 76 und zum Abschneiden des derart verschlossenen Schlauchhüllenabschnitts 100 vom Schlauchhüllenstrang 82 mit Hilfe der Abtrenneinrichtung 78 geschaffen wird (Fig. 4 oben).

Inzwischen ist das andere Tragrohr 50 weiter auf das Füllrohr 12 aufgeschoben und dabei aus dem zurückgehaltenen Schlauchhüllenabschnitt 100 herausgezogen worden, und der dortige Kraftzylinder 44 hat die beiden Rohrsegmente 46, 48 in die in Fig. 2 rechts gezeigte Öffnungsstellung auseinandergespreizt (Fig. 4 unten).

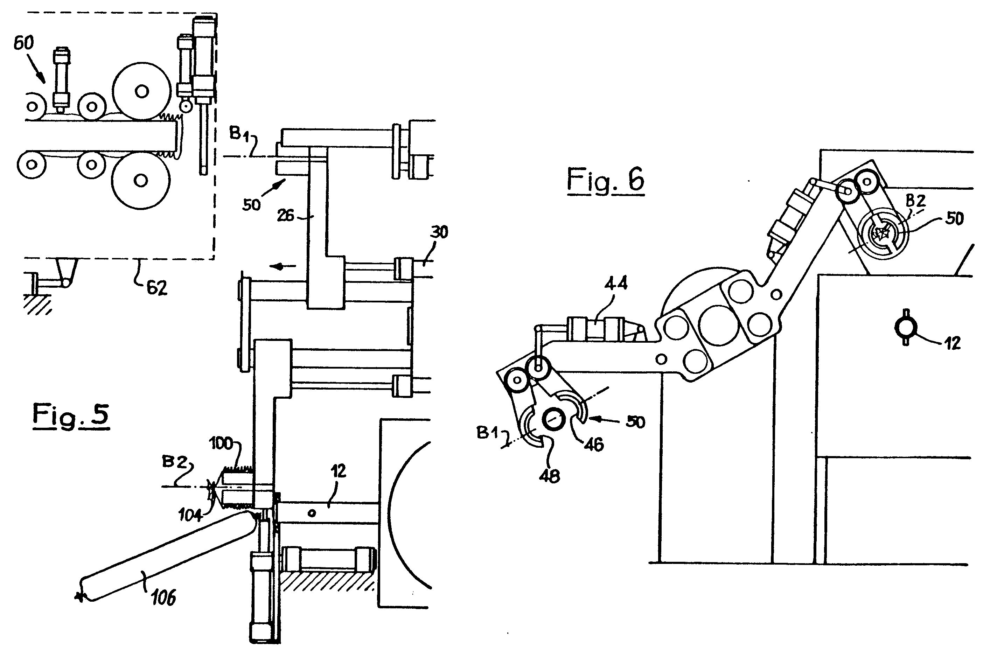

Damit wäre die Revolvereinrichtung 20 an sich bereit, in eine neue Arbeitsstellung umzuschalten und den in der Stellung A1 auf das dortige Tragrohr 50 aufgezogenen neuen Schlauchhüllenabschnitt 100 vor das Füllrohr 12 zu bringen. Dort dauert jedoch der Füllvorgang noch an und würde mit der Verschließeinrichtung 14 und der Darmbremse 16 die Verschwenkung des Tragrohrs 50 mit dem neuen Schlauchhüllenabschnitt 100 in die Arbeitsstellung A2 behindern. Die Spreizung der Rohrsegmente 46, 48 des anderen Tragrohrs am Füllrohr 12 ermöglicht jedoch bereits eine Teilverschwenkung der Revolvereinrichtung 20 um etwa 160° (Fig. 5 und 6) in eine Zwischen- oder Bereitschaftsstellung, in welcher das den neuen Schlauchhüllenabschnitt 100 tragende und von innen verspannende Tragrohr 50 die Stellung B2 einnimmt, während am anderen Tragarm 26 die Rohrsegmente 46, 48 in die Stellung B1 neben der Luftzuführeinrichtung 90 gelangen, in welcher sie gegeneinander geschwenkt und mit Hilfe des Kraftzylinders 30 wieder vorgefahren werden.

Wenn dann der Füllvorgang am Füllrohr 12 beendet ist, verschließt die Verschließeinrichtung 14 das hintere Ende der dadurch entstandenen Wurst 106 und wird zusammen mit der Darmbremse 16 vom Kraftzylinder 18 in die das Füllrohr freigebende Stellung zurückgezogen, wobei die Wurst 106 auf eine (nicht gezeigte) Ablagefläche fällt (Fig. 5 unten).

Nun kann die Revolvereinrichtung 20 erneut betätigt werden und verschwenkt die Tragrohre 50 in die Stellungen A2 bzw. A1, wodurch derselbe Zustand wie zu Beginn des Arbeitszyklus, nur mit vertauschten Tragrohren hergestellt wird und ein neuer Arbeitszyklus beginnen kann. Es versteht sich von selbst, daß bei diesem zweiten Arbeitszyklus die Revolvereinrichtung 20 in der umgekehrten Richtung verschwenkt werden muß. Diese durch die Anordnung der Hebel 38, 40 an den Tragarmen 26 bedingte Hin- und Herverschwenkung der Revolvereinrichtung 20 hat den Vorteil, daß die Zufuhr des Druckmediums zu den Kraftzylindern 28 und 44 über flexible Schläuche erfolgen kann und dadurch aufwendige und zu Leckströmungen neigende Druckmittelzuführanordnungen zu rotierenden Teilen entfallen.

Die Erfindung ist nicht auf das vorbeschriebene Ausführungsbeispiel beschränkt. Insbesondere können im Rahmen des Grundgedankens der Erfindung die von den beiden Rohrsegmente 46, 48 gebildeten Tragrohre 50 auch durch andere Elemente ersetzt werden wie beispielsweise ein einseitig geschlitztes Tragrohr mit einer solchen Schlittenbreite, daß das Füllrohr durch den Schlitz hindurchtreten kann, oder eine Anzahl, beispielsweise vier, auf einem Kreisumfang verteilter Stangen, zwischen denen gleichfalls ein ausreichender Abstand zum Durchtritt des Füllrohrs vorhanden ist. Bei einer solchen Ausbildung können die Kraftzylinder 44 entfallen, sofern das dann fehlende Verspannen der Schlauchhüllenabschnitte auf den Trägern in Kauf genommen werden kann.

**Patentansprüche**

1. Verfahren zum taktweisen Beschicken des Füllrohres einer Wurstfüll- und Verschließmaschine mit füllfertigen Schlauchhüllenabschnitten, wobei ein auf einer Vorratsrolle flach aufgewickeltes Schlauchhüllenmaterial zunächst abgezogen, geöffnet und in jeweils einer Abschnittslänge axial auf einen Träger aufgezogen wird und daraufhin der aufgezogene Hüllenabschnitt vom Materialstrang abgetrennt und mit dem Träger vor das Füllrohr zur Überführung auf dieses verbracht wird, während gleichzeitig auf einem weiteren Träger ein neuer Hüllenabschnitt zur Wiederholung der vorerwähnten Arbeitsschritte im ständigen Wechsel der beiden Träger aufgezogen wird, dadurch gekennzeichnet, daß jeweils in der gleichen axialen Richtung der Schlauchhüllenabschnitt auf den Träger aufgezogen, der Träger auf das Füllrohr aufgeschoben und der Träger aus dem festgehaltenen Schlauchhüllenabschnitt herausgezogen wird und daß schließlich der Träger zur Seite weggebracht wird.

2. Verfahren nach Anspruch 1, dadurch gekennzeichnet, daß sofort nach dem Aufziehen des Trägers mit dem Schlauchhüllenabschnitt auf das Füllrohr die Verschließeinrichtung der Füllmaschine mit der daran angebrachten Darmbremse in Stellung am überstehenden Füllrohrende gebracht und die Füllmaschine eingeschaltet wird.

3. Verfahren nach Anspruch 1 oder 2, dadurch gekennzeichnet, daß mit jedem Aufziehen eines Hüllenabschnitts auf das Füllrohr der nächste Hüllenabschnitt auf den weiteren Träger aufgezogen, verschlossen und abgetrennt wird, während der Füllvorgang noch läuft.

4. Verfahren nach Anspruch 3, dadurch gekennzeichnet, daß noch während des Füllens der weitere Träger mit dem darauf aufgezogenen Hüllenabschnitt in der Nähe des Füllrohres zum endgültigen Verbringen vor das Füllrohr bereitgestellt wird, während der erste Träger zunächst auf dem Füllrohr in der aus dem Schlauchhüllenabschnitt herausgezogenen Stellung verbleibt und erst mit der Bereitstellung des weiteren Trägers in der Nähe des Füllrohres seinerseits von diesem seitlich weggebracht wird.

5. Verfahren nach einem der Ansprüche 1 bis 4, dadurch gekennzeichnet, daß dem Schlauchhüllenmaterial während des Aufziehens durch den Träger Luft zum Aufblähen und/oder Flüssigkeit zum innenseitigen Benetzen zugeführt wird.

6. Verfahren nach einem der Ansprüche 1 bis 5, dadurch gekennzeichnet, daß die Hüllenabschnitte gerafft und gegen ein axiales Aufspringen nach dem Raffen gesichert werden.

7. Verfahren nach Anspruch 6, dadurch gekennzeichnet, daß die Hüllenabschnitte nach dem Aufziehen von innen her auf dem Träger verspannt werden und diese Verspannung erst beim Aufschieben auf das Füllrohr wieder gelöst wird.

8. Vorrichtung zur Durchführung des Verfahrens nach einem der Ansprüche 1 bis 7 mit zwei Trägerrohren (50), welche mittels einer schaltbaren Revolvereinrichtung (20) wechselweise zwischen einer ersten Position vor einer Hüllenöffnungs- und -aufzieheinrichtung (60) und einer zweiten Position vor einem Füllrohr (12) einer Wurstfüll- und -verschließmaschine bewegbar sind, wobei an der Hüllenöffnungs- und -aufzieheinrichtung (60) ein Schneidwerkzeug (78) zum Abtrennen der aufgezogenen Hüllenabschnitte (100) vom Materialstrang und vor dem Füllrohr (12) eine Verschließeinrichtung (76) mit einer das Füllrohr (12) beim Füllen übergreifenden Darmbremse (16) vorgesehen sind, welche bei der Umschaltung der Revolvereinrichtung (20) aus dem Schwenkbereich der Tägerrohre (50) wegbewegbar sind, dadurch gekennzeichnet, daß jedes Trägerrohr (50) mit seinem einen Ende an der Revolvereinrichtung (20) axial von dieser wegragend angebracht ist, dad das in der ersten Position befindliche Trägerrohr (50) mit dem nicht befestigten Ende der Hüllenöffnungs- und -aufzieheinrichtung (60) und das in der zweiten Position befindliche Trägerrohr (50) mit dem befestigten Ende dem Füllrohr (12) zugekehrt ist, daß die Trägerrohre (50) bezüglich der Revolvereinrichtung (20) durch getrennte Antriebe (30) axial verschieblich sind und daß die Trägerrohre (50) axial durchgehend geschlitzt und seitlich von dem Füllrohr (12) wegbringbar sind.

9. Vorrichtung nach Anspruch 8, dadurch gekennzeichnet, daß die Trägerrohre (50) in zwei Rohrsegmente (46, 48) unterteilt sind, die mit Hilfe pneumatischer Kraftzylinder auseinanderspreizbar sind.

10. Vorrichtung nach Anspruch 8 oder 9, dadurch gekennzeichnet, daß die Verschließeinrichtung (76) derart steuerbar ist, daß sie den auf das dortige Trägerrohr (50) aufgezogenen Hüllenabschnitt (100) vor dem Abtrennen verschließt.

11. Vorrichtung nach einem der Ansprüche 8 bis 10, gekennzeichnet durch eine durch das in Aufziehstellung (A1) befindliche Trägerrohr (50) für die Dauer des Aufziehens einfahrbare Luft- und/oder Flüssigkeitszuführeinrichtung (90, 94).

## Claims

1. A method of cyclically charging the filling tube of a sausage filling and closing machine with tubular casing portions wich are ready for filling, wherein a tubular casing material which is wound in a flat condition on a supply roll is firstly drawn off, opens and axially pulled on to a carrier, over a respective length corresponding to a portion, and thereupon the casing portion which has been pulled on to the carrier is cut from the string of material and moved with the carrier into a position in front of the filling tube for transfer thereonto, while at the same time a fresh casing portion is pulled on to a further carrier for repeating the above-mentioned operating steps with a continuous interchage in respect of the two carriers, characterised in that it is in each case in the same axial direction that the casing portion is pulled on to the carrier, the carrier is pushed on to the filling tube, and the carrier is pulled out of the casing portion which is held fast, and that finally the carrier is moved away to the side.

2. A method according to claim 1 characterised in that, immediately after the carrier with the tubular casing has been pulled on to the filling tube, the closing means of the filling machine, with the skin brake mounted thereon, is moved into position at the projecting end of the filling tube, and the filling machine is switched on.

3. A method according to claim 1 or claim 2 characterised in that, with each operation of pulling a casing portion on to the filling tube, the next portion is pulled on to the other carrier, closed and cut off while the filling operation is still taking place.

4. A method according to claim 3 characterised in that while the filling operation is still taking place the other carrier with the casing portion pulled thereon is prepared in the vicinity of the filling tube for the definitive movement into position in front of the filling tube while the first carrier initially remains on the filling tube in the position of being drawn out of the tubular casing portion and is in turn removed laterally from the filling tube only with preparation of the other carrier in the vicinity of the filling tube.

5. A method according to one of claims 1 to 4 characterised in that air for inflation purposes and/or liquid for internal wetting is supplied to the tubular casing material during the operation of being pulled on to the carrier, through the carrier.

6. A method according to one of claims 1 to 5 characterised in that the casing portions are gathered and secured to prevent them from axially springing open after the gathering operation.

7. A method according to claim 6 characterised in that after having been pulled on to the carrier the casing portions are braced on the carrier from the inside and the bracing action is released again only when the casing portions are pushed on to the filling tube.

8. Apparatus for carrying out the method according to one of claims 1 to 7 comprising two carriers tubes (50) which are movable by means of an indexable turret arrangement (20) alternately between a first position in front of a casing opening and pulling-on means (60) and a second position in front of a filling tube (12) of the sausage filling and closing machine, wherein provided at the casing opening and pulling-on means (60) is a cutting tool (78) for cutting the pulled-on casing portions (100) from the string of material and provided in front of the filling tube (12) is a closing means (76) with a skin brake (16) which engages over the filling tube (12) in the filling operation, said cutting tool and said closing means being movable away from the range of pivotal movement of the carrier tubes (50) in the change-over movement of the turret arrangement (20), characterised in that each carrier tube (50) is mounted with its one end on the turret arrangement (20), projecting axially away from same, that the carrier tube (50) which is in the first position faces with its end which is not fixed towards the casing opening and pulling-on means (60) and the carrier tube (50) which is in the second position faces with its fixed end towards the filling tube (12), that the carrier tubes (50) are axially displaceable relative to the turret arrangement (20) by separate drives (30) and that the carrier tubes (50) are axially slit throughout and can be moved laterally away from the filling tube (12).

9. Apparatus according to claim 8 characterised in that the carrier tubes (50) are divided into two tube segments (46, 48) wich can be spread apart by means of pneumatic power cylinders.

10. Apparatus according to claim 8 or claim 9 characterised in that the closing means (76) is controllable in such a way that it closes the tubular casing portion (100) which has been pulled on to the carrier tube (50) at that location, prior to the cutting operation.

11. Apparatus according to one of claim 8 to 10 characterised by an air and/or liquid suply means (90, 94) which can be introduced through the carrier tube (50) in the pulling-on position (A1), for the duration of the pulling-on operation.

**Revendications**

1. Procédé pour alimenter de façon cadencée le tube de remplissage d'une machine à bourrer et ligaturer les saucisses, avec des sections de boyau prêtes à être remplies, et selon lequel tout d'abord on prélève un matériau en forme de boyau enroulé à plat sur un rouleau débiteur, on l'ouvre et on l'emmanche axialement sur un support, sur une longueur respective d'une section, on sépare ensuite la section de boyau emmanchée du cordon du matériau et on l'amène ainsi que le support, devant le tube de remplissage, pour l'enfiler sur ce dernier, tout en emmanchant simultanément, sur un autre support, une nouvelle section de boyau de manière à répéter les phases opératoires mentionnées précédemment, et ce avec une alternance permanente entre les deux supports, caractérisé en ce qu'on emmanche respectivement la section du boyau sur le support, respectivement dans la même direction axiale, qu'on installe le support sur le tube de remplissage, qu'on retire le support hors de la section de boyau, maintenue fermement, et qu'enfin on écarte le support latéralement.

2. Procédé selon la revendication 1, caractérisé en ce qu'aussitôt après avoir monté le support, muni de la section de boyau, sur le tube de remplissage, on amène le dispositif de fermeture de la machine de remplissage, sur lequel est monté le frein de retenue du boyau, dans une position située devant l'extrémité saillante du tube de remplissage, et on branche la machine de remplissage.

3. Procédé selon la revendication 1 ou 2, caractérisé en ce que, lors de chaque emmanchement d'une section de boyau sur le tube de remplissage, on emmanche la section immédiatement suivante de boyau sur l'autre support, on la ferme et on la sépare, tandis que l'opération de remplissage se poursuit.

4. Procédé selon la revendication 3, caractérisé en ce que, pendant la poursuite du remplissage, on amène l'autre support, sur lequel est emmanchée la section de boyau, à proximité du tube de remplissage pour la placer finalement devant ce tube, tandis que le premier support reste tout d'abord sur le tube de remplissage dans la position ressortie hors de la section de boyau et que ce premier support n'est pour sa part écarté latéralement du tube de remplissage que lors de l'amenée de l'autre support à proximité du tube de remplissage.

5. Procédé selon l'une des revendications 1 à 4, caractérisé en ce qu'on envoie de l'air servant au gonflage et/ou un liquide servant à réaliser le mouillage intérieur au matériau en forme de boyau, à l'intérieur du support, pendant l'emmanchement.

6. Procédé selon l'une des revendications 1 à 5, caractérisé en ce qu'on resserre les sections de boyau et qu'on les bloque contre un mouvement d'extension axiale après l'opération de resserrement.

7. Procédé selon la revendication 6, caractérisé en ce qu'on tend les sections de boyau à partir de l'intérieur, sur le support, après leur emmanchement et qu'on supprime à nouveau cette mise en tension uniquement lors de l'emmanchement sur le tube de remplissage.

8. Dispositif pour la mise en oeuvre du procédé selon l'une des revendications 1 à 7, comportant deux tubes de support (50), qui peuvent être déplacés à l'aide d'un dispositif revolver commutable (20) en alternance entre une première position devant un dispositif (60) d'ouverture et d'emmanchement des boyaux, et une seconde position située devant un tube de remplissage (12) d'une machine servant à bourrer et ligaturer les boyaux, et dans lequel il est prévu, sur le dispositif (60) d'ouverture et d'emmanchement des boyaux, un outil de découpage (78) servant à séparer les sections emmanchées de boyau (100), du cordon du matériau en forme de boyau et, devant le tube de remplissage (12), un dispositif de fermeture (76) comportant un frein (16) de retenue du boyau, qui s'engage par-dessus le tube de remplissage (12) lors du remplissage, l'outil et le dispositif pouvant être écartés hors de la zone de pivotement des tubes de support (50) lors de la commutation du dispositif revolver (20), caractérisé en ce que chaque tube de support (50) est monté, au moyen de l'une de ses extrémités, sur le dispositif revolver (20), de manière à être axialement en saillie par rapport à ce dernier, en ce que le tube de support (50) est situé dans la première position, son extrémité non fixée est tournée vers le dispositif (60) d'ouverture et d'emmanchement des boyaux, et que le tube de support (50) est situé dans la seconde position, son extrémité fixe est tournée vers le tube de remplissage (12), en ce que tubes de support (50) sont déplaçables axialement par rapport au dispositif revolver (20) grâce à des dispositifs séparés d'entraînement (30), et en ce que les tubes de support (50) comportent une fente axiale continue et peuvent être écartés latéralement du tube de support (12).

9. Dispositif selon la revendication 8, caractérisé en ce que les tubes de support (50) sont subdivisés en deux segments (46, 48), qui peuvent être écartés l'un de l'autre à l'aide de vérins pneumatiques.

10. Dispositif selon la revendication 8 ou 9, caractérisé en ce que le dispositif de fermeture (76) est commandable de telle sorte qu'il ferme la section de boyau (100), emmanchée sur le tube de support (50), présent dans son voisinage, avant la séparation.

11. Dispositif selon l'une des revendications 8 à 10, caractérisé par un dispositif (90, 94) d'amenée d'air et/ou de liquide pouvant être introduit dans le tube de support (50) situé dans la position d'emmanchement (A1), pendant la durée de cet emmanchement.

Fig. 1

Fig. 2

Fig. 3

Fig. 4

Fig. 5

Fig. 6

EP 0 110 343 B1